# EUROPEAN PATENT SPECIFICATION

(11) **EP 2 510 270 B1**
(45) Date of publication and mention of the grant of the patent: **28.01.2015**
(21) Application number: 10803386.1
(22) Date of filing: 13.12.2010
(51) Int. Cl.: F16L 3/10

(54) **PIPELINE HOLD BACK CLAMP**
KLEMMVORRICHTUNG FÜR LEITUNGEN
PINCE DE RETENUE POUR CONDUITS

(30) Priority: 11.12.2009 GB 0921706
(43) Date of publication of application: 17.10.2012
(73) Proprietor: Subsea 7 Limited, Sutton, Surrey SM2 5AS (GB)
(72) Inventor: VU, Dan, Leicestershire LE12 5JB (GB)
(74) Representative: Lawrence, Richard Anthony
(86) International application number: PCT/GB2010/052076
(87) International publication number: WO 2011/070376

(56) References cited:
- WO-A1-2008/086738
- DE-A1- 2 601 597
- FR-A1- 2 605 083
- US-A- 5 918 639
- US-A1- 2005 103 948
- US-A1- 2007 214 670
- US-A1- 2009 078 425
- US-A1- 2009 200 802
- IK Stavanger IS: "Grouted Riser Clamp", , 8 October 2009 (2009-10-08), XP002636482, Retrieved from the Internet: URL:http://www.ik.no/doc/02_custom_built/G routed Riser Clamp, project example.pdf [retrieved on 2011-05-11]

## Description

### Field of the Invention:

The present invention relates to a hold-back clamp and, in particular, but not exclusively, to a hold-back clamp, which is used subsea to connect to pipelines and resist movement thereof.

### Background to the Invention:

Subsea pipelines that lie on the seabed tend to migrate over time due to tidal influences and seabed movements. One solution to this is to anchor a pipeline at intervals along its length. Anchor chains are typically connected to the pipeline by hold-back clamps, which are fitted to the outer surface of the pipe, and can provide a padeye or other anchoring point for attachment of the anchor chain. The anchors connected to the hold back clamps by means of the chains restrain migration or movements of the pipelines on the sea bed.

There are two types of hold-back clamps in common use today, frictional hold-back clamps and slip ring hold-back clamps. Each of these hold-back clamps is configured to frictionally engage an outer coating of a subsea pipe so as to prevent movement of the hold-back clamp relative to the pipe.

Each of these commonly used hold-back clamps is formed of two half-cylinder portions which can be bolted together to form a tubular hold-back member which closes around a portion of a pipe and receives it in a bore of the clamp. In use the two half-cylinder portions are positioned opposite one another along a portion of the pipe and are bolted together to clamp the pipe between the half-cylinder portions.

Frictional hold-back clamps typically comprise two half-cylinder portions each having a substantially smooth inner surface. The two half-cylinder portions are bolted together around the pipe so that the smooth inner surface of each of the half-cylinder portion is pressed against the outer surface of the pipe. Friction between the inner surface of each half-cylinder and the outer surface of the pipe prevents movement of the frictional hold-back clamp relative to the pipe. The grip between the inner surface of each half-cylinder and the outer surface of the pipe is directly proportional to the amount of surface contact between inner surface of each half-cylinder portion and the outer surface of the pipe.

To ensure a sufficient grip on the pipe frictional hold-back clamps need to be relatively long so as to provide sufficient surface contact between the inner surface of each half-cylinder portion and the outer surface of the pipe.

Slip ring hold-back clamps comprise two half-cylinder portions provided with slip rings having teeth projecting radially inwardly toward the pipe. In use, the two half-cylinder portions are positioned opposite one another around a length of the pipe and are bolted together causing the projections on the slip rings to bite into the outer surface of the pipe. The projections frictionally grip the outer surface (e.g. the coating) of the pipe to prevent movement of the slip ring hold-back clamp relative to the pipe.

Although the slip ring hold-back clamps can be shorter than the frictional hold-back clamps, as they bite into the coating of the pipe this can result in high local stresses on the coating of the pipe, and possibly on the pipe itself.

US 2005/253024 discloses a pipe assembly comprising a pipe and a hold-back clamp, wherein: the hold-back clamp has an anchor connection point for connecting an anchor to the pipe, wherein the hold-back clamp comprises at least first and second shells adapted to close around the pipe such that the clamp at least partially encircles the pipe and wherein two radial projections are provided on an inner surface of the shells, wherein an annulus is formed between the clamp and the pipe such that a volume comprising the radial projections is formed between the outer surface of the pipe and the clamp, adapted such that there exists a clearance between an inner end of each radial projection and the outer surface of the pipe such that settable material that is flowable in fluid form can be flowed throughout the volume, the clamp and pipe being disposed such that when flowable material has been flowed into the volume and set, the radial projections are within the volume, thereby securing the clamp to the pipe.

### Summary of the Invention:

According to a first aspect of the present invention there is provided a pipe assembly according to claim 1.

Typically the clamp comprises a centralising device.

Typically the clamp is spaced from the pipe by at least one spacer device. The spacer device can comprise a centralising device.

The shells can be partially cylindrical, although other shapes of shells can be contemplated within the scope of the invention.

The shells can typically enclose the pipe and define the radial boundaries of the annulus. Alternatively the shells can enclose only a part of the circumference of the pipe.

As noted above, the annulus is suitable for receiving a settable material. The settable material is typically injected into the annulus, typically through a wall of the clamp, and is typically adapted to change phase from a fluid to a solid phase after injection into the annulus.

The spacer device can internal, e.g. between the clamp (e.g. the shells) and the pipe, or can be external, e.g. outside the clamp and supporting the clamp in a configuration that spaces the shells from the pipe. In one option the spacer device can be a frame that holds the outside of the clamp in a defined spatial relationship with the pipe, typically centering the two in relation to one another so that they are co-axial.

According to the invention, two radial projections are anchored to the inner surface of at least one of the shells. The radial projections can optionally comprise the spacer, but the spacer can optionally be provided separately from the radial projections.

The spacer can typically act to transfer forces from the clamp to the pipe, typically via the settable material. Typically the spacer extends perpendicularly from the inner face of a shell, typically from each shell, into the annulus and typically toward the central axis of the pipe. The spacer can have at least one flat face, typically extending perpendicularly with respect to the shell to which it is attached. The flat face can extend into the annulus, typically across the axis of the pipe.

Each radial projection typically extends substantially around the whole circumference of the inner surface of the shells, although partial radial projections are also contemplated within the scope of the invention.

Optionally each radial projection can be formed as an integral part of the shell, e.g. by casting the shell and the radial projection as one item.

In alternative embodiments each radial projection can be formed separately and attached to the shell.

The radial projections can comprise a rib such as a shear key ring, adapted to resist shear forces applied between the pipe and the clamp.

Optionally more than two radial projections can be provided, e.g. 3, 4 or some higher number of radial projections, typically spaced axially apart from one another on the inner surface of the shell. The radial projections can optionally be disposed in a parallel arrangement to one another.

The radial projections are embedded in the settable material.

Typically the radial projection is adapted to key into the settable material, to resist pull out of the radial projection from the settable material after it has set. For example, the radial projection can optionally have passages such as channels extending parallel to the axis of the pipe, to allow the passage of settable material axially through or around the radial projection. Other formations can be provided on or in the radial projections to enhance the ability of the radial projection to key into the settable material.

According to the invention, the radial projections extend radially into the annulus, but do not extend to the pipe, and the inner end of each radial projection is disposed in the annulus, with clearance in the annulus between the inner end of the radial projection and the outer surface of the pipe, so that settable material can flow in fluid form between the inner end of the radial projection and the outer surface of the pipe.

The clamp is installed in a location on the pipe where an annular groove or recess is provided in the radially outermost surface of the pipe, and the radial projection(s) on the shell(s) extends into the annular groove or recess,

Optionally the clamp can be installed on a section of the pipe that is coated, and typically the coating is treated to provide the at least one groove or recess in the coating to receive the radial projection(s) of the clamp. According to the invention, each radial projection extends into a groove. Each groove is formed with a larger dimension than the radial projection, so that the radial projection is a loose fit within the groove, allowing passage of settable fluid around the radial projection while located in the groove, to fill the space between the inner surface of the groove and the outer surface of the radial projection.

The groove is deeper than the radial extent of the radial projection.

The groove is axially wider than the axial dimension of the radial projection (with respect to the pipe).

The clamp can typically be connected to the pipe at a location of the pipe where two pipe sections are connected together, and the pipe connection is coated with a coating that is applied locally, such as a field joint coating.

The field joint coating can typically be applied as a settable material that sets before the clamp is applied.

The grooves are typically machined or otherwise formed in the field joint coating, so that a portion of the or each shear key ring can be received into one or more recesses defined in a field joint coating of the pipe.

Optionally, the or each shear key ring is configured such that when the portion of the or each shear key ring is received into the one or more recesses defined a field joint coating, a gap exists between the or each shear key ring and walls, which define the one or more recesses, wherein the gap is suitable for receiving settable material to secure the hold-back clamp to the field joint coating.

At least one of the shells may have one or more injection ports for injection of settable material. Optionally, the one of more injection ports are provided in one of the shells. The shells may also include riser ports to allow passage of fluids out of the annulus, typically when displaced by injection of settable material. The injection ports maybe configured to permit settable material to be injected into the annulus.

Optionally, the or each anchor connection point has a channel through a strengthened anchor point, such as a padeye, for receiving a shackle or the like. Typically more than one anchor point can be provided. For example, each shell can have an anchor connection point, typically disposed at circumferentially spaced locations on the clamp. Typically the circumferential spacing between the anchor connection points on the clamp are substantially equal. Typically the anchor connection points are located axially between two radial projections.

The coating (e.g. the field joint coating) may comprise a polymeric material, typically a plastics material, Suitable plastics materials might include polypropylene or polyurethane, although other materials can be used instead without departing from the scope of the invention The field joint coating may be injection moulded in place on a pipe junction, typically before the clamp is applied.

According to a second aspect of the present invention there is provided, a method of securing a hold-back clamp to a pipe according to claim 9.

Optionally, the settable material is injected into the annulus via one or more injection ports defined in the tubular assembly. Optionally, settable material is injected into the annulus until settable material begins to discharge from riser ports provided in the tubular assembly.

Typically the pipe is coated and the recesses are provided on the coating.

Typically the settable material is contained within the annulus during the setting of the settable material by means of at least one containment end seal. Typically two or more seals are provided at opposite ends of the annulus. Typically, the or each seal also provides the spacer for the shells to space the shells from the pipe. The seals typically also centralise the shells around the pipe and define the standoff between the shells and the outer surface of the pipe.

The spacer (e.g. especially an internal spacer such as the seal) can be resilient, and can deform when pressed against the outer surface of the pipe.

When the seals are in place, and before the settable material is injected, the annulus is typically flushed (e.g. with fresh water) to flush sea water and debris from the annulus, and is then typically dried, e.g. by the injection of a dry gas into the annulus, such as nitrogen. Typically after the annulus has been flushed and dried, the settable material is then typically injected into the annulus, optionally via the injection ports, such that the settable material substantially fills the annulus and also substantially fills any gaps between and through the one or more radial projections and the walls of the recess. The settable material is then typically allowed to set to change phase from fluid to solid, so that the settable material secures the clamp to the pipe and also secures the radial projections in the recesses.

Optionally the settable material can be injected at high pressure, sufficient to force the settable material into any cracks in the coating or the pipe, before setting of the settable material.

Typically the settable material has a low thermal conductivity, and insulates the pipe against heat loss across the area where the clamp is applied.

In certain embodiments of the invention, the clamp can be provided in more than two portions. For example, in some cases, the clamp can be provided in a semi-cylindrical top shell circumscribing 180 degrees of the pipe, and a two-part bottom shell, which can optionally have two separate parts each hingedly connected to the top shell and each circumscribing 210 degrees of the pipe. The two parts of the bottom shell can close around the pipe to encircle it. Optionally the two parts of the bottom shell can be urged by double-acting hydraulic rams mounted between the top shell and each part of the bottom shell, which can drive the opening and closing of the bottom shell parts around the pipe.

Optionally the shells together can circumscribe 360 degrees of the pipe, and the outer walls of the shells (or inner walls if desired) can contain the settable material and define the annulus. In other embodiments, however the shells between them circumscribe less than 360 degrees of the circumference of the pipe.

Embodiments of the invention typically have high tolerance to pipeline ovality and irregular pipe surface shapes, as the annulus between the clamp and the pipe can typically have a relatively large radial dimension, with sufficient clearance to accommodate extensive ovality or other deviations of the pipe. The mechanical connection between the clamp and the pipe (or the coating if a coated pipe is used) can typically be provided by the injected settable material, which can flow around the annulus (or the chamber) and mechanically bond the two together.

Certain embodiments of the invention allow the use of shorter clamps and a more even distribution of loads applied between the clamp and the pipe.

The various aspects of the present invention can be practiced alone or in combination with one or more of the other aspects, as will be appreciated by those skilled in the relevant arts. The various aspects of the invention can optionally be provided in combination with one ore more of the optional features of the other aspects of the invention. Also, optional features described in relation to one embodiment can typically be combined alone or together with other features in different embodiments of the invention.

Certain embodiments of the invention can include anti-corrosion coatings and devices, such as sacrificial anodes, corrosion resistant cladding and the like.

Various embodiments and aspects of the invention will now be described in detail with reference to the accompanying figures. Still other aspects, features, and advantages of the present invention are readily apparent from the entire description thereof, including the figures, which illustrates a number of exemplary embodiments and aspects and implementations. The invention is also capable of other and different embodiments and aspects, and its several details can be modified in various respects, all without departing from the spirit and scope of the present invention. Accordingly, the drawings and descriptions are to be regarded as illustrative in nature, and not as restrictive. Furthermore, the terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes.

Any discussion of documents, acts, materials, devices, articles and the like is included in the specification solely for the purpose of providing a context for the present invention. It is not suggested or represented that any or all of these matters formed part of the prior art base or were common general knowledge in the field relevant to the present invention.

In this disclosure, whenever a composition, an element or a group of elements is preceded with the transitional phrase "comprising", it is understood that we also contemplate the same composition, element or group of elements with transitional phrases "consisting essentially of, "consisting", "selected from the group of consisting of, or "is" preceding the recitation of the composition, element or group of elements and vice versa.

All numerical values in this disclosure are understood as being modified by "about". All singular forms of elements, or any other components described herein including (without limitations) components of the apparatus to collect cuttings are understood to include plural forms thereof and vice versa.

The settable material is typically an epoxy grout that is pumpable, and that retains its fluid phase for sufficient time to permit mixing and injection (approximately 30-60 minutes) at 2-5°C and which sets to a solid phase thereafter within 24 hours. Typically, the setting time to reach solid phase is less than 6 hours. Typically, the grout comprises a resin, such as epoxy resin, and a catalyst or hardener that induces or accelerates the phase change from liquid to solid. Typically, the two are mixed together before injection to the annulus between the clamp device and the pipe.

The settable material can typically be an epoxy or cement-based grout, adapted to change phase at the normal operating temperature or the pipe clamp. In some embodiments of the invention, the settable material can comprise a filler material. A typical settable material comprises a resin component, such as bisphenol epoxy resin, a hardener typically derived from aliphatic polyamines, and silica fillers. A typical grout that is useful for certain embodiments of the invention is grout DG38, DG38/07 and DG38/09 and derivatives thereof available from Weber, Flitwick, United Kingdom.

In certain embodiments of the invention, a heating element can be included in the clamp for heating of the grout to accelerate or initiate the setting of the grout after injection.

The separate components of the grout can typically be mixed while being pumped into the annulus, and typically in a mixing pipe that supplies the injection line through the body of the clamp. Optionally, the mixing line can incorporate an auger, or other rotary or static mixing apparatus forcing the two components of the grout to mix within the mixing line before they reach the injection line into the annulus. Typically, each component of the grout is retained in a bladder or other container, which can optionally be disposed adjacent to the pipe in the location where the pipe clamp is to be applied, and the piped distance between the unblended components in the containers and the injection line into the annulus is typically short, in order to avoid premature setting of the mixed components in the mixing line before reaching the annulus.

### Brief Description of the Drawings:

An embodiment of the invention will now be described by way of example only, with reference to the accompanying drawings in which,
Figure 1 provides a longitudinal section view of a hold-back clamp, according to an embodiment of the present invention, when applied to a pipe forming part of a pipeline;
Fig. 2 is an end sectional view on line A-A of Fig. 1;
Fig. 3 is a perspective cutaway view of the Fig. 1 clamp;
Fig. 4 is a perspective view of the hold-back clamp of figure 1 in use;

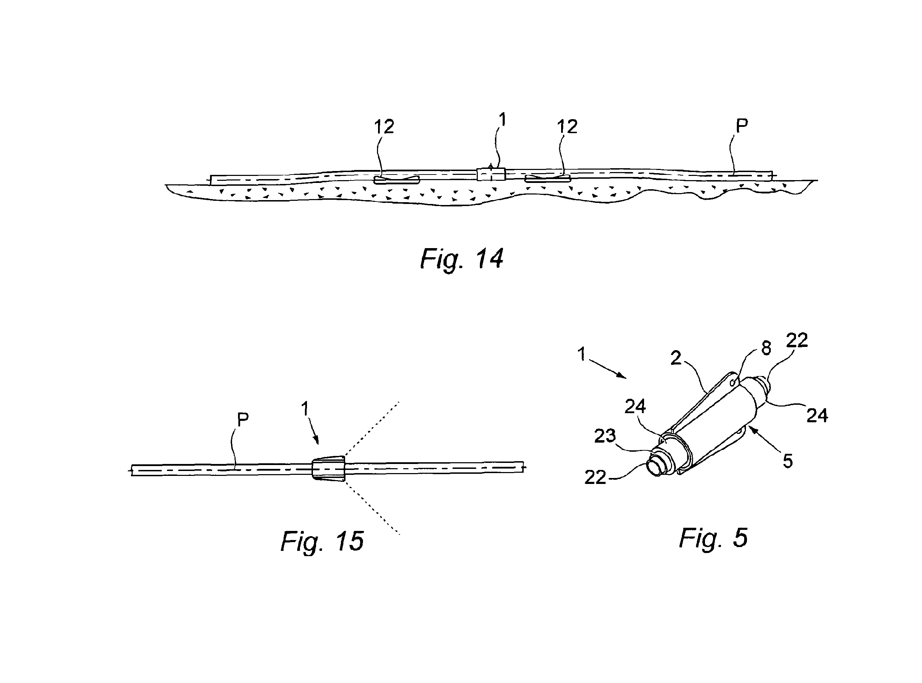

Fig. 5 is a perspective view of the section of the clamp connected to the pipe;
Fig. 6 is a side view of the pipe being elevated for clamping;
Fig. 7 is a plan view of the Fig. 6 arrangement;
Fig. 8 is a sequential view of the elevated pipe being grooved for connection of the clamp;
Fig. 9 is a close up view of the grooved section of the pipe, at the field joint between two pipe sections;

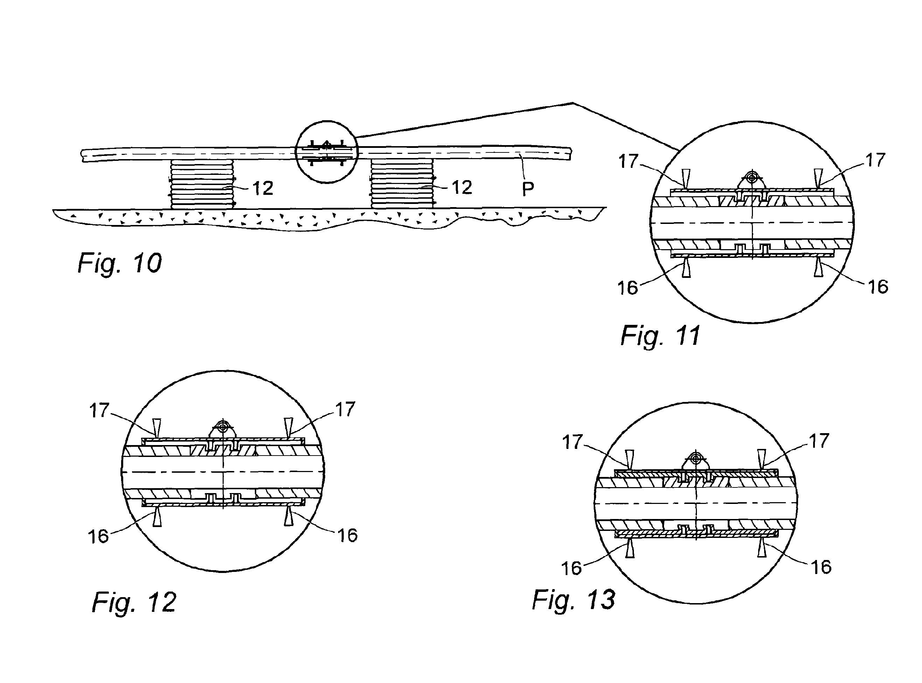

Fig. 10 shows the clamp being applied to the grooved field joint coating;
Fig. 11 is a close up view of the field joint in Fig. 10;
Fig. 12 is a sectional view through the clamp and field joint in Fig. 11, with seals being applied to the ends of the clamp;
Fig 13 is a sectional view of the annulus between the clamp and the pipe being filled with grout;
Fig 14 is a side view of the pipe being returned to the seabed for anchoring;
Fig 15 is a side view of anchor chains being connected to the clamp to restrain migration of the pipeline on the seabed;
Fig 16 is a side view of a hold-back clamp, according to a second embodiment of the present invention, when applied to a pipe forming part of a pipeline;
Fig 17 is a top view of the arrangement of Fig 16;
Fig. 18 is an end view of Fig. 16; and
Fig. 19 is a perspective cutaway view of the Fig. 16 clamp.

### Detailed Description of the Drawings

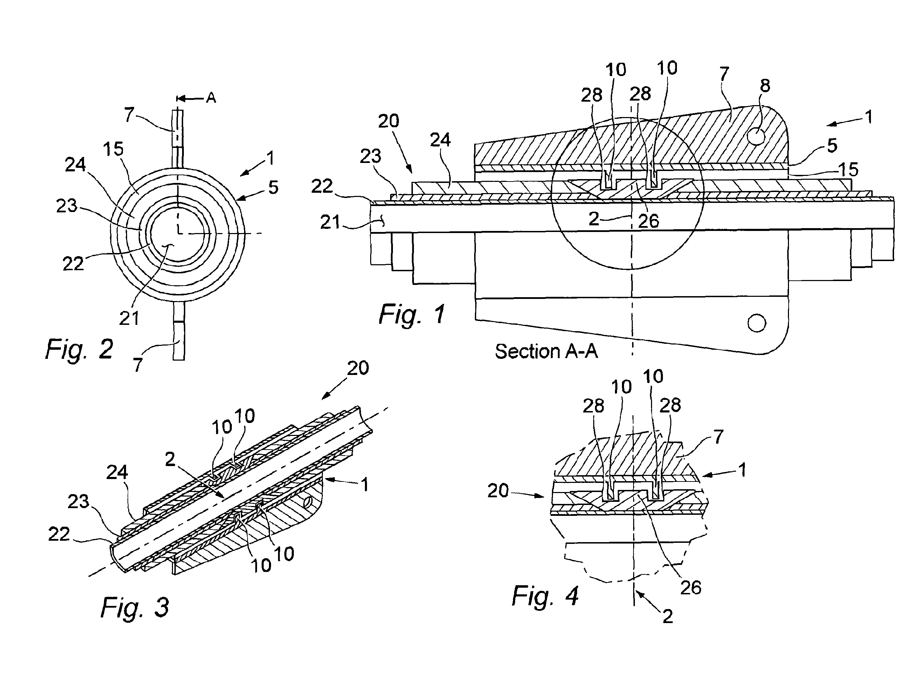

Figure 1 provides a longitudinal section view of a hold-back clamp 1, according to a first embodiment of the present invention, when applied to a pipe 20.

The pipe 20 is shown to be formed of concentric layers. The concentric layers include an innermost pipe 22 of metal or plastic pipe, which has a throughbore 15 for the flow of fluids through the pipeline, a liner 23 and a thick outer coating layer 24 of insulating material to protect the inner pipe 22 and to reduce heat loss of the fluids flowing through it. The inner pipe 22 is of solid polypropylene in this example, and the coating 24 typically comprises syntactic polypropylene.

The clamp 1 is positioned over a field joint 2, which comprises two adjacent sections of pipe 20 connected together during a laying procedure. The field joint 2 is formed during laying and connection procedures are typically carried out on a surface vessel as the pipe sections are lowered into the water. Generally, the coating layer 24 and liner 23 are stripped back from the two separate ends of the pipe sections to be connected, the two bare ends of the pipe sections are connected together by known techniques, and the gap in the coating 24 is then filled by applying what is known as a field joint coating 26, which typically comprises an injection moulded layer of a plastics material such as polyurethane. The polyurethane forming the field joint coating 26 is injected into the gap between the cut back areas of coating 24, and is formed to the required shape, over the connection between the two adjacent pipe sections.

The hold-back clamp 1 typically a generally tubular assembly 5 with a bore that receives a portion of the pipe 20. The tubular assembly 5 is formed by a pair of half shells which cooperate together to form the tubular assembly 5. The tubular assembly 5 is spaced away from the pipe such that an annulus 15 is defined between the pipe 20 and the tubular assembly 5.

Two anchor connection points, in the form of padeye members 7, are attached to an outer surface of the tubular assembly 5. The padeye members 7 are typically located opposite one another, typically one on each half shell, or alternatively the half shells can be connected at the pad eye members 7. It will be understood that one or more than two or any number of padeye members 7 could be provided and the padeye members 7 could be located at any suitable position on the outer surface of the tubular assembly 5. It will be understood that the padeye members 7 could take any suitable shape, aspect or design. Each padeye member 7 has an aperture 8 defined therein. One of more anchor members can be secured to the padeye members 7, by means of a shackle or the like passing through the aperture 8, to connect the hold-back clamp 1 to an anchor after connection of the clamp 1 around the pipe 20, to restrain migration of the pipeline on the seabed.

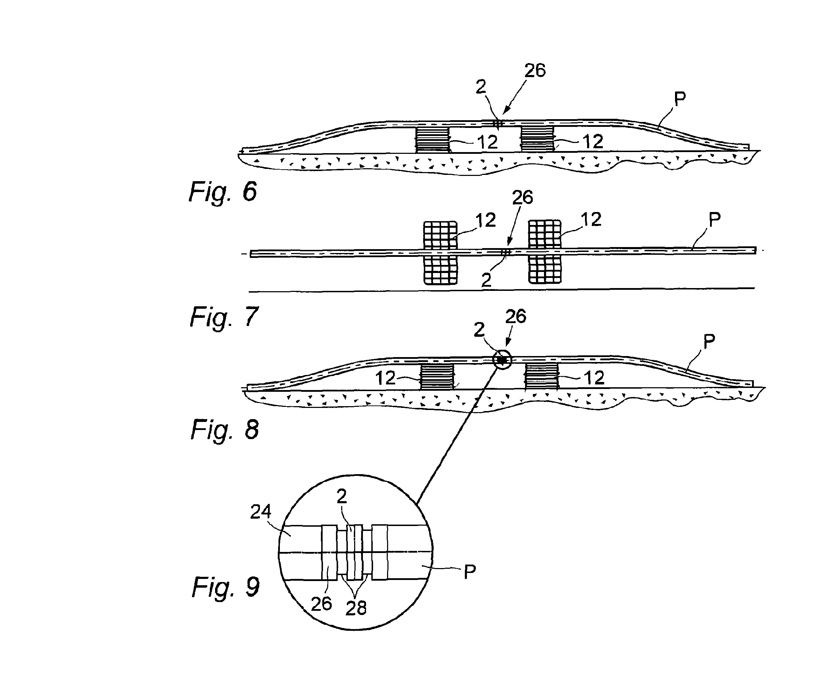

Referring now to Figs 6-9. a pipeline P to be anchored to the seabed is initially raised on water filled bladders 12 by known means, until the field joint 2 between two adjacent pipe lengths is elevated sufficiently for application of the clamp 1. Fig 6 and Fig. 7 show the pipeline P before the clamp is applied. When the pipeline P has been raised from the seabed, the field joint is initially treated to receive the clamp, by machining annular grooves 28 in the field joint coating 26 that was applied when the pipeline P was laid. The annular grooves 28 are typically parallel and are of even depth, and are typically spaced apart axially with respect to the axis of the pipeline, typically at equal distances on either side of the field joint centreline, as shown in Fig. 8 and Fig. 9. The padeye aperture 8 is typically located between the grooves 28.

The tubular assembly 5 is typically constructed of a first shell and a second shell, which are typically bolted together by means of bolts 6, which penetrate the padeye members 7, to clamp the half shells around the pipe 20. At least one of the shells, e.g. the second shell typically has two ports 16 passing radially through the shell 5 permitting fluid communication through the wall of the shell. The ports 16 serve to allow injection of fluids through the wall of the shells and into the annulus 15. The other shell has a further pair of ports 17, which typically function as riser ports to allow flushing of fluids from the annulus to the outside of the clamp 1, Typically both of the shells have the same structure. Note that a single fluid injection port is sufficient. A riser port is optional. Neither is necessary.

As shown in Fig. 1, the inner surface of the tubular assembly 5 of the two half shells has two radial projections, which are typically in the form of a pair of shear key rings 10. The shear key rings 10 are typically formed as integral projections extending from the inner face of the half shells of the tubular assembly 5. The shear key rings 10 typically extend around at least a part of the circumference of the inner surface of the tubular assembly 5, although it is not necessary and is sometime advantageous that they extend only part of the way around the inner circumference of the tubular assembly 5. Typically the shear key rings project radially inwards from the inner surface 26 of the tubular assembly 5.

The annular grooves 28 in the field joint coating 26 are typically machined so that the axial spacing between them is typically the same (centre to centre) as the axial spacing between the radially projecting shear key rings, and the clamp 1 is located on the pipeline at a position in which the grooves 28 and the shear key rings 10 are axially aligned with one another. Also, the radial dimensions of the shear key rings and the radial depths of the grooves 28 is such that a portion of each shear key ring 10 projects into the annular grooves 28 in the field joint coating 26. In typical embodiments of the invention, each shear key typically extends substantially to the bottom of each groove 28.

However, the spacing between the clamp 1 and the pipe 20 is controlled so that the radial end of each of the shear key rings 10 does not reach the bottom of its groove, thus there is a gap between the radial end of each of the shear key rings 10 and the bottom of the groove 28. Similarly, the axial dimensions of the shear key rings 10 are typically less than the axial dimensions of the walls of the grooves 28, so there is also a space between the shear key rings 10 and the walls of the annular grooves 28.

As shown in figure 9, the pipe 20 is first machined, using a cutting tool, to define the pair of annular grooves 28 within the field joint coating 26. Optionally, the outer surface of the pipe coating 24 is roughened as shown in Fig 9 using an abrader tool with abrasive heads.

Once the pipe coating 24 has been roughened as shown in Fig. 9, the two part shells of the hold-back clamp 1 are positioned over roughened area of coating 24 so that the shear key rings 10 are aligned with and project into the annular grooves 28 in the field joint coating 26. The shells are then connected together (typically by means of bolts) to press the shells together and form the tubular assembly 5 which clamps the pipe 20. The tubular assembly 5 encloses an annulus 15 between the pipe 20 and the tubular assembly 5.

End seals 14 are then positioned at opposing ends of the tubular assembly 5, to seal the annulus 15. The end seals are typically resilient and can be used to retain the fluid grout within the annulus, and are not required for providing structural support or centralisation to the clamp after the grout is cured.

Once the annulus 15 is sealed, it is flushed by passing fresh water through injection ports 16, into the annulus 15. The annulus 15 is then typically dried by injecting pressurised nitrogen, via injection ports 17, into the annulus 15. Fluids are typically flushed through the annulus and exit through the riser ports 17.

Once the chamber is dry, a liquid settable material such as grout can typically be injected through the injection ports 17 into the annulus 15. The annulus 15 is continuous, and so the liquid settable material flows around it to create a tubular layer of settable material filling the annulus and extending around the pipe 21. In particular, the settable material injected through the injection ports 17 flows over the outer surface of the field joint coating 26.

Setting of the settable material is then allowed or promoted, so that the settable material changes phase within the annulus and hardens in place. The clamp is typically left for the settable material to change phase from its liquid phase in which it was pumped into the annulus 15 to a solid phase. The change in phase typically occurs as a result of a hardener or catalyst component and the remainder of the settable material, which is mixed with the hardener or catalyst before being injected, or during the injection process. Typically, the settable material comprises an epoxy resin and an aliphatic polyamine hardener. In the present example, the settable material used was grout DG38, DG38/07, or DG118/09 available from Weber UK. The grout was mixed with a sufficient amount of catalyst at a local site adjacent to the pipe. This was typically achieved by transferring a bladder of the resin and a bladder of the hardener to the sea bed on a grout skid, and expelling measured amounts of each into a common mixing tube provided with an auger in order to mix the two components together as they pass through the mixing tube (not shown). The mixing tube connects to the outer end of the injection port 17 in order to inject the mixed grout into the annulus before it has started to harden.

The end seals closing off the annulus 15 are typically simple resilient bands that are adapted to deform in order to encircle the pipe to seal off the annulus. The pressure rating of the end seals in the present embodiment is typically sufficient to retain the grout within the annulus 15 as it is injected, but in this embodiment, the grout is typically not injected under high pressure, and the resilient packer seals used in this embodiment do not need to be high performance or long lasting seals. Also, the seals do not need to transfer excessive radial force against the outer surface of the pipe, and it is sufficient if the grout is largely retained in the annulus and maintained there while the setting process is under way. The setting time can vary according to the grout selected, but with the grouts used in this present examples, this typically takes around 12-24 hours at normal sea bed temperatures of 2-5 degrees, although typically the clamp is left for approximately 24-36 hours to ensure complete hardening of the grout within the annulus.

The settable material is continually injected into the annulus 15 until it begins to discharge from riser ports 17. The injected settable material thereby fills the annulus 15 and also fills any gaps between the shear key rings 10 and the walls of the annular grooves 28 in the field joint coating 26.

The settable material also fills cracks and other gaps that have formed in the coating or in the pipe as a result of the abrading or installation procedure.

Once the grout has hardened in the annulus, the whole area surrounding the field joint coating 26 is mechanically supported by the grout, which has also been transferred into any cracks or surface irregularities in the area of the field joint coating 26, thereby structurally supporting the pipe, and reducing the likelihood of leakage in the area. The set grout also transfers the internal pressure of the pipeline fluid radially outwards onto the body of the clamp, which removes hoop stress from the pipe in the region of the field joint coating 26, thereby also reducing the likelihood for future failures of the pipe at this site.

The clamp is typically left in place for the life of the pipeline. Setting of the settable material secures the clamp 1 in place on the pipe 20, and fixes the shear key rings 10 into the grooves 28 in the field joint coating 26. Thus, the hold-back clamp 1 is secured to the pipe 20.

Anchor members (not shown) are then attached to bridles connected to the hold-back clamp 1 via the padeye members 7. The anchors restrict migration of the pipe 20 on the seabed.

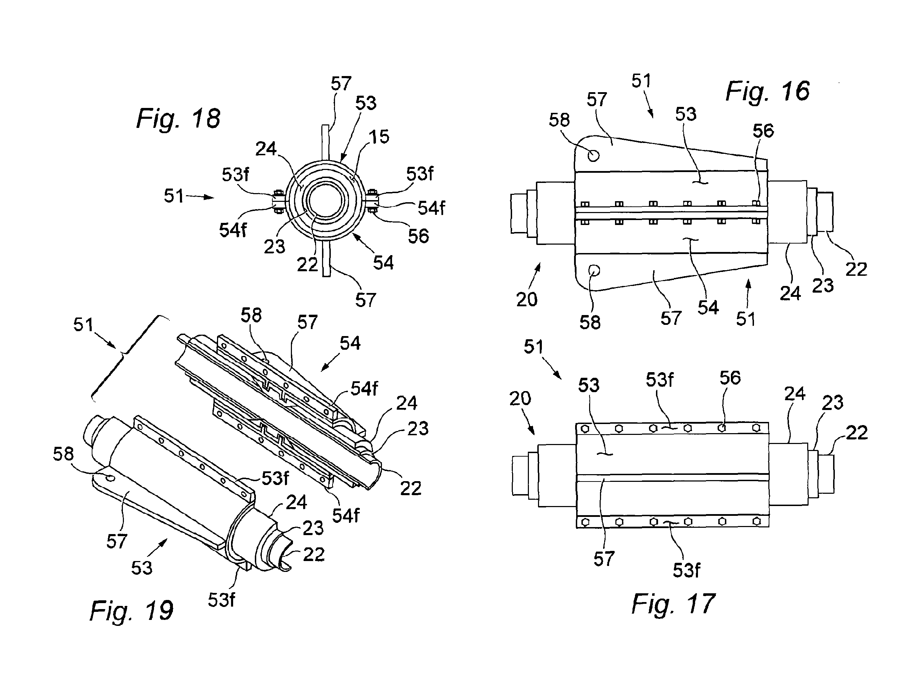

A modified embodiment of a clamp 51 according to the invention is shown in Figs 16-19. The clamp 51 is similar to the clamp 1 and has like parts in common which are referred to with the same reference number but increased by 50. Therefore, the like parts will not be described hereinafter. The clamp 51 is formed from two half shells 54, 53, which connect to one another along diametrically opposed flanges 54f, 53f, which extend along the clamp 51 parallel to one another and to the central axis of the tubular assembly. The flanges 54f, 53f are typically connected together by means of bolts 56 or other suitable fixings. In use the two half shells 54, 53 are assembled together around the pipe as shown and the bolts 56 tightened to clamp the shells 54,53 around the pipe 20. In other respects the internal and external structure of the modified embodiment of the clamp 51, its connection to the pipe by means of the grout, and its connection to the anchors by means of the padeye members 57 is as described for the first embodiment 1.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A pipe assembly comprising a pipe (20) and a hold-back clamp (1), wherein:
the hold-back clamp (1) has an anchor connection point (7) for connecting an anchor to the pipe, wherein the hold-back clamp (1) comprises at least first and second shells adapted to close around the pipe such that the clamp at least partially encircles the pipe and wherein two radial projections (10) are anchored to an inner surface of at least one of the shells, wherein a respective corresponding annular groove (28) for each radial projection (10) is formed on an outer surface of the pipe, each radial projection (10) extending into the corresponding annular groove (28);
wherein an annulus is formed between the clamp (1) and the pipe such that a volume comprising the radial projections (10) and the annular grooves (28) is formed between the outer surface of the pipe and the clamp, adapted such that there exists a clearance between an inner end of each radial projection (10) and the outer surface of the pipe such that settable material that is flowable in fluid form can be flowed throughout the volume, the clamp and pipe being disposed such that when flowable material has been flowed into the volume and set, the radial projections (10) are within the volume and each radial projection (10) is received in the corresponding annular groove (28), thereby securing the clamp to the pipe.

2. A pipe assembly as claimed in claim 1, wherein the clamp comprises a spacer device which comprises a centralising device.

3. A pipe assembly as claimed in claim 1 or claim 2 , wherein at least one of the shells has one or more injection points (16) for injection of settable material into the volume.

4. A pipe assembly as claimed in any preceding claim, wherein at least one of the shells has one or more riser ports (17) to allow passage of fluids out of the volume.

5. A pipe assembly as claimed in any preceding claim, wherein the or each anchor connection point (7) has a channel through a strengthened anchor point for receiving a shackle.

6. A pipe assembly as claimed in any preceding claim, wherein the annular grooves (28) to receive the radial projections of the clamp are provided by creating the grooves on an outer surface of a pipe coating.

7. A pipe assembly as claimed in any preceding claim, wherein a heating element is included in the clamp for heating of settable material to accelerate or initiate the setting of settable material after injection.

8. A pipe assembly as claimed in any preceding claim, comprising an anti-corrosion device.

9. A method of securing a hold-back clamp (1) to a pipe (20), the hold-back clamp having first and second shells adapted to close around the pipe and having two radial projections (10) anchored to an inner surface of at least one the shells, a portion of each radial projection being received into a respective corresponding annular groove (28) defined in an outer surface of the pipe, comprising the steps of:
preparing the annular grooves (28) on an outer surface of the pipe;
receiving the pipe within the clamp, such that the clamp at least partially encircles the pipe and an annulus is formed between the clamp (1) and the pipe wherein each of the radial projections (10) is disposed in a corresponding one of the annular grooves (28), and a volume including the radial projections (10) and the annular grooves (28) is defined between the outer surface of the pipe and the clamp, wherein there exists a clearance between an inner end of each radial projection (10) and the outer surface of the pipe such that settable material which is flowable in fluid form can be flowed throughout the volume;
injecting settable material into the volume, and
allowing the injected settable material to change phase from fluid to solid, so that the settable material secures the radial projections (10) to the outer surface of the pipe, thereby securing the hold-back clamp (1) to the pipe (20).

10. A method as claimed in claim 9 wherein the clamp is connected to the pipe at a location of the pipe where two pipe sections are connected together.

11. A method as claimed in claim 9 or claim 10, further comprising sealing the volume with seals, and before injecting the settable material, flushing the volume to remove sea water and debris from the volume, and drying the volume.

12. A method as claimed in any one of claims 9 to 11 wherein the settable material is injected into the volume via one or more injection ports (16) defined in the clamp.

13. A method as claimed in any one of claims 9 to 12, wherein settable material is injected into the volume until settable material begins to discharge from riser ports (17) provided in the clamp.

14. A method as claimed in any one of claims 9 to 13 wherein the settable material is an epoxy grout that is pumpable, and that retains its fluid phase for sufficient time to permit mixing and injection at 2-5°C and which sets to a solid phase thereafter within 24 hours.

## Patentansprüche

1. Rohrbaugruppe, die ein Rohr (20) und eine Rückhalteklemme (1) umfasst, wobei:
die Rückhalteklemme (1) einen Ankerverbindungspunkt (7) zum Verbinden eines Ankers mit dem Rohr hat, wobei die Rückhalteklemme (1) wenigstens eine erste und eine zweite Schale umfasst, die dafür eingerichtet sind, sich um das Rohr zu schließen, derart, dass die Klemme wenigstens teilweise das Rohr umschließt, und wobei zwei radiale Vorsprünge (10) an einer Innenfläche wenigstens einer der Schalen verankert sind,
wobei eine jeweilige entsprechende ringförmige Rille (28) für jeden radialen Vorsprung (10) auf einer Außenfläche des Rohrs geformt ist, wobei sich jeder radiale Vorsprung (10) in die entsprechende ringförmige Rille (28) erstreckt,
wobei ein Ringspalt zwischen der Klemme (1) und dem Rohr gebildet wird, derart, dass ein Raum, der die radialen Vorsprünge (10) und die ringförmigen Rillen (28) umfasst, zwischen der Außenfläche des Rohrs und der Klemme gebildet wird, derart eingerichtet, dass es einen Freiraum zwischen einem inneren Ende jedes radialen Vorsprungs (10) und der Außenfläche des Rohrs gibt derart, dass erhärtbares Material, das in flüssiger Form fließfähig ist, durch den gesamten Raum geleitet werden kann, wobei die Klemme und das Rohr derart angeordnet sind, dass, wenn fließfähiges Material in den Raum geleitet worden und erhärtet ist, sich die radialen Vorsprünge (10) innerhalb des Raumes befinden und jeder radiale Vorsprung (10) in der entsprechenden ringförmigen Rille (28) aufgenommen wird, wodurch die Klemme an dem Rohr befestigt wird.

2. Rohrbaugruppe nach Anspruch 1, wobei die Klemme ein Abstandsstück umfasst, das eine Zentriereinrichtung umfasst.

3. Rohrbaugruppe nach Anspruch 1 oder Anspruch 2, wobei wenigstens eine der Schalen einen oder mehrere Einspritzpunkte (16) zum Einspritzen von erhärtbarem Material in den Raum hat.

4. Rohrbaugruppe nach einem der vorhergehenden Ansprüche, wobei wenigstens eine der Schalen einen oder mehrere Steigleitungsanschlüsse (17) hat, um einen Durchgang von Fluids aus dem Raum zu ermöglichen.

5. Rohrbaugruppe nach einem der vorhergehenden Ansprüche, wobei der oder jeder Ankerverbindungspunkt (7) einen Kanal durch einen verstärkten Ankerpunkt zum Aufnehmen eines Schäkels hat.

6. Rohrbaugruppe nach einem der vorhergehenden Ansprüche, wobei die ringförmigen Rillen (28) zum Aufnehmen der radialen Vorsprünge der Klemme durch das Erzeugen der Rillen auf einer Außenfläche eines Rohrüberzugs bereitgestellt werden.

7. Rohrbaugruppe nach einem der vorhergehenden Ansprüche, wobei ein Heizelement in der Klemme eingeschlossen ist, um erhärtbares Material zu heizen, um das Erhärten des erhärtbaren Materials nach dem Einspritzen zu beschleunigen oder einzuleiten.

8. Rohrbaugruppe nach einem der vorhergehenden Ansprüche, die eine Korrosionsschutzeinrichtung umfasst.

9. Verfahren zum Befestigen einer Rückhalteklemme (1) an einem Rohr (20), wobei die Rückhalteklemme eine erste und eine zweite Schale hat, die dafür eingerichtet sind, sich um das Rohr zu schließen und zwei radiale Vorsprünge (10) hat, die an einer Innenfläche wenigstens einer der Schalen verankert sind, wobei ein Abschnitt jedes radialen Vorsprungs in einer jeweiligen entsprechenden ringförmigen Rille (28) aufgenommen wird, die in einer Außenfläche des Rohrs definiert ist, wobei das Verfahren die folgenden Schritte umfasst:
Vorbereiten der ringförmigen Rillen (28) auf einer Außenfläche des Rohrs,
Aufnehmen des Rohrs innerhalb der Klemme, derart, dass die Klemme wenigstens teilweise das Rohr umschließt und ein Ringspalt zwischen der Klemme (1) und dem Rohr gebildet wird, wobei jeder der radialen Vorsprünge (10) in einer entsprechenden der ringförmigen Rillen (28) angeordnet ist und ein Raum, der die radialen Vorsprünge (10) und die ringförmigen Rillen (28) einschließt, zwischen der Außenfläche des Rohrs und der Klemme gebildet wird, wobei es einen Freiraum zwischen einem inneren Ende jedes radialen Vorsprungs (10) und der Außenfläche des Rohrs gibt, derart, dass erhärtbares Material, das in Fluidform fließfähig ist, durch den gesamten Raum geleitet werden kann,
Einspritzen von erhärtbarem Material in den Raum und
Ermöglichen, dass das eingespritzte erhärtbare Material die Phase von flüssig zu fest wechselt, so dass das erhärtbare Material die radialen Vorsprünge (10) an der Außenfläche des Rohrs befestigt, wodurch die Rückhalteklemme (1) an dem Rohr (20) befestigt wird.

10. Verfahren nach Anspruch 9, wobei die Klemme an einer Position des Rohrs, wo zwei Rohrabschnitte miteinander verbunden sind, mit dem Rohr verbunden wird.

11. Verfahren nach Anspruch 9 oder Anspruch 10, das ferner das Abdichten des Raums mit Dichtungen und, vor dem Einspritzen des erhärtbaren Materials, das Spülen des Raums, um Meerwasser und Schutt aus dem Raum zu entfernen, und das Trocknen des Raums umfasst.

12. Verfahren nach einem der Ansprüche 9 bis 11, wobei das erhärtbare Material über einen oder mehrere Einspritzanschlüsse (16), die in der Klemme definiert sind, in den Raum eingespritzt wird.

13. Verfahren nach einem der Ansprüche 9 bis 12, wobei das erhärtbare Material in den Raum eingespritzt wird, bis das erhärtbare Material beginnt, aus Steigleitungsanschlüssen (17), die in der Klemme bereitgestellt werden, auszutreten.

14. Verfahren nach einem der Ansprüche 9 bis 13, wobei das erhärtbare Material ein Epoxidmörtel ist, der pumpfähig ist und der seine flüssige Phase für eine ausreichende Zeit beibehält, um ein Mischen und Einspritzen bei 2 bis 5°C zu ermöglichen und der danach innerhalb von 24 Stunden zu einer festen Phase erhärtet.

## Revendications

1. Ensemble tuyau comprenant un tuyau (20) et une pince de retenue (1), dans lequel:
la pince de retenue (1) a un point de raccordement d'ancrage (7) pour raccorder un ancrage au tuyau, dans lequel la pince de retenue (1) comprend au moins des première et seconde enveloppes adaptées pour se fermer autour du tuyau de sorte que la pince encercle au moins partiellement le tuyau et dans lequel deux protubérances radiales (10) sont ancrées à une surface interne d'au moins l'une des enveloppes,
dans lequel une rainure annulaire correspondante (28) respective pour chaque protubérance radiale (10) est formée sur une surface externe du tuyau, chaque protubérance radiale (10) s'étendant dans la rainure annulaire correspondante (28) ;
dans lequel un espace annulaire est formé entre la pince (1) et le tuyau de sorte qu'un volume comprenant les protubérances radiales (10) et les rainures annulaires (28) soit formé entre la surface externe du tuyau et la pince, adapté de sorte qu'il existe un débattement entre une extrémité interne de chaque protubérance radiale (10) et la surface externe du tuyau de sorte qu'un matériau durcissable qui est liquide sous forme fluide puisse s'écouler à travers le volume, la pince et le tuyau étant disposés de sorte que lorsque le matériau liquide s'est écoulé dans le volume et a durci, les protubérances radiales (10) soient à l'intérieur du volume et chaque protubérance radiale (10) soit reçue dans la rainure annulaire correspondante (28), fixant ainsi la pince au tuyau.

2. Ensemble tuyau selon la revendication 1, dans lequel la pince comprend un dispositif d'espacement qui comprend un dispositif de centralisation.

3. Ensemble tuyau selon la revendication 1 ou la revendication 2, dans lequel au moins l'une des enveloppes a un ou plusieurs points d'injection (16) pour injecter un matériau durcissable dans le volume.

4. Ensemble tuyau selon l'une quelconque des revendications précédentes, dans lequel au moins l'une des enveloppes a un ou plusieurs orifices de colonne montante (17) pour permettre le passage de fluides hors du volume.

5. Ensemble tuyau selon l'une quelconque des revendications précédentes, dans lequel le ou chaque point de raccordement d'ancrage (7) a un canal à travers un point d'ancrage renforcé pour recevoir une manille.

6. Ensemble tuyau selon l'une quelconque des revendications précédentes, dans lequel les rainures annulaires (28) destinées à recevoir les protubérances radiales de la pince sont fournies en créant les rainures sur une surface externe d'un revêtement de tuyau.

7. Ensemble tuyau selon l'une quelconque des revendications précédentes, dans lequel un élément chauffant est inclus dans la pince pour chauffer un matériau durcissable afin d'accélérer ou d'amorcer le durcissement d'un matériau durcissable après injection.

8. Ensemble tuyau selon l'une quelconque des revendications précédentes, comprenant un dispositif anti-corrosion.

9. Procédé de fixation d'une pince de retenue (1) à un tuyau (20), la pince de retenue ayant des première et seconde enveloppes adaptées pour se fermer autour du tuyau et ayant deux protubérances radiales (10) ancrées à une surface interne d'au moins l'une des enveloppes, une partie de chaque protubérance radiale étant reçue dans une rainure annulaire correspondante (28) respective définie dans une surface externe du tuyau, comprenant les étapes consistant à :
préparer les rainures annulaires (28) sur une surface externe du tuyau ;
récevoir le tuyau à l'intérieur de la pince, de sorte que la pince encercle au moins partiellement le tuyau et qu'un espace annulaire soit formé entre la pince (1) et le tuyau, dans lequel chacune des protubérances radiales (10) est disposée dans une rainure correspondante des rainures annulaires (28), et un volume incluant les protubérances radiales (10) et les rainures annulaires (28) est défini entre la surface externe du tuyau et la pince, dans lequel il existe un débattement entre une extrémité interne de chaque protubérance radiale (10) et la surface externe du tuyau de sorte qu'un matériau durcissable qui est liquide sous forme fluide puisse s'écouler à travers le volume ;
injecter du matériau durcissable dans le volume, et
permettre au matériau durcissable injecté de passer d'une phase fluide à solide, de sorte que le matériau durcissable fixe les protubérances radiales (10) à la surface externe du tuyau, fixant ainsi la pince de retenue (1) au tuyau (20).

10. Procédé selon la revendication 9, dans lequel la pince est raccordée au tuyau au niveau d'un emplacement du tuyau où deux sections de tuyau sont raccordées ensemble.

11. Procédé selon la revendication 9 ou la revendication 10, comprenant en outre : l'étanchéification du volume avec des joints, et avant l'injection du matériau durcissable, le vidage du volume pour enlever l'eau de mer et les débris du volume, et le séchage du volume.

12. Procédé selon l'une quelconque des revendications 9 à 11, dans lequel le matériau durcissable est injecté dans le volume via un ou plusieurs orifices d'injection (16) définis dans la pince.

13. Procédé selon l'une quelconque des revendications 9 à 12, dans lequel le matériau durcissable est injecté dans le volume jusqu'à ce que le matériau durcissable commence à s'évacuer des orifices de colonne montante (17) agencés dans la pince.

14. Procédé selon l'une quelconque des revendications 9 à 13, dans lequel le matériau durcissable est un coulis époxy qui est pompable, et qui reste en phase fluide assez longtemps pour permettre le mélange et l'injection à 2 à 5 °C et qui durcit en une phase solide ensuite dans les 24 heures.
